# EUROPEAN PATENT SPECIFICATION

(11) **EP 3 865 402 B1**
(45) Date of publication and mention of the grant of the patent: **15.12.2021**
(21) Application number: 20400004.6
(22) Date of filing: 17.02.2020
(51) Int. Cl.: B64C 27/26, B64C 39/06

(54) **A TAILLESS COMPOUND HELICOPTER**
HECKLOSER VERBUNDHUBSCHRAUBER
HÉLICOPTÈRE COMBINÉ SANS QUEUE

(43) Date of publication of application: 18.08.2021
(73) Proprietor: AIRBUS HELICOPTERS DEUTSCHLAND GmbH, 86609 Donauwörth (DE)
(72) Inventor: BLACHA, Martin, 86609 Donauwörth (DE); FINK, Axel, 86609 Donauwörth (DE)
(74) Representative: GPI Brevets

(56) References cited:
- EP-A1- 2 690 011
- EP-A1- 3 141 478
- EP-B1- 3 141 478
- US-A- 2 665 859
- US-A1- 2013 134 253

## Description

The present embodiments relate to a compound helicopter with a fuselage, at least one main rotor that is at least adapted for generating lift in operation, and a fixed wing arrangement that is laterally attached to the fuselage.

Conventional helicopters are typically characterized by the use of a main rotor and a tail boom with an auxiliary tail rotor that is adapted to counter torque. In addition to the tail rotor, the tail boom often has stabilizing vertical and horizontal tail planes that are mounted, together with the tail rotor, at the aft portion of the tail boom.

The tail boom of modern helicopters is essentially a closed cylindrical structure which extends rearward of the fuselage. The tail boom is typically designed either as a fish tail, which is characterized by a smooth transition from the fuselage to the tail boom structure, or as a beam tail, which extends from the upper portion of the rear fuselage.

The tail boom represents a relatively long aft structural prolongation with respect to the longitudinal extension of the fuselage, because it is intended to provide for a large lever arm for the tail surfaces with respect to the helicopter's center of gravity which essentially corresponds to the rotor mast position. A large lever arm enables a reduction in size of the vertical and horizontal tail surfaces and the power and rotor disc size required by the tail rotor to counter torque.

At high forward velocities, the vertical surfaces at the tail boom are typically designed to provide for the passive anti-torque capabilities, as well as for directional flight stability. The horizontal tail surfaces are designed to provide for sufficient longitudinal flight stability.

Typically, conventional helicopters suffer from the interaction of the main rotor wake and the horizontal tail planes, especially at hover and small forward speeds. Therefore, in order to reduce the interaction of the main rotor wake and the horizontal tail planes, the tail planes and the tail rotor are typically arranged outside the perimeter of the main rotor disc when looked at the helicopter from above.

However, tail booms have a negative effect on the overall dynamic behavior of the helicopter. For example, helicopters with tail booms often suffer from tail shake phenomenon and structural fatigue issues. Furthermore, tail boom ground strikes do happen frequently in practice and the corresponding loads often are dimensioning for the tail boom junction. As a consequence of their size, tail booms often require a heavy dismountable junction to the fuselage for air transportation or for interchangeability requirements.

Compound helicopters and so-called convertiplanes are basically the most relevant concepts aiming to overcome horizontal flight deficiencies of conventional helicopters by introducing attributes of fixed-wing aircrafts to such conventional helicopters as a compromise. However, a compromise between both aircraft types has always to be conveniently adapted to a planned mission profile of a given helicopter.

An exemplary convertiplane is e. g. described in the document US 5,046,684 A. More specifically, the latter describes a tiltrotor aircraft with a fuselage and a fixed wing arrangement. On each side of the fuselage a first and a second wing are arranged. The first wing is fixed at substantially the bottom of the fuselage. The second wing is fixed at substantially the top of the fuselage, or fixed to a structure extending above the fuselage. At least one of the first and second wings has dihedral so that the wings converge to join or nearly join at their tips. Furthermore, unducted rotor means are provided for generating aerodynamic lift sufficient for highly efficient hovering flight and for propelling the tiltrotor aircraft at speeds approaching roughly four hundred knots in forward cruising flight. The unducted rotor means are supported on the first and second wings, at or near the tips of the first and second wings. They can be pivoted for operation in different orientations in hovering and forward flight respectively.

In other words, according to the document US 5,046,684 A, the tiltrotor aircraft features two fully tiltable rotors, one at each side of the fuselage, and which are respectively arranged at the tips of a joint wing of the fixed wing arrangement. In this fixed wing arrangement, the lower, i.e. first wing is straight and positively swept, and the upper, i.e. second wing is straight and exhibits a very pronounced negative sweep. The upper wing is anhedral and connects the tip of the lower wing of the fixed wing arrangement to the tip of the tiltrotor aircraft's fin.

In contrast to such a tiltrotor aircraft, winged compound helicopter configurations with separate propulsion units typically feature a monoplane design with one set of wing surfaces in cantilever design as shoulder-wing arrangement. A compound helicopter with lift compounding, thrust compounding or a combination of both basically aims to off-load a respective main rotor from its simultaneous lifting and propulsive duties to allow for higher forward speeds of the compound helicopter.

More specifically, lift compounding entails adding wings to a helicopter, hence enabling to increase an underlying load factor of the helicopter and to reach a higher maneuverability. This improves the efficiency of the helicopter at moderately high speed but at the expense of reduced efficiencies at lower forward speeds and in the hover.

Thrust compounding implies the addition of essentially horizontally oriented auxiliary propulsion units to the helicopter. This has been typically accomplished by means of a single or a pair of propellers being driven by drive shafts powered by main turboshaft engines of the helicopter. The use of a pair of propulsion units has the advantage of providing for anti-torque capabilities without the need of an additional tail rotor, hence relativizing the inherent system complexity of the thrust compound configuration.

A more extended configuration of a compound helicopter includes both the addition of wings and propulsion units. In this case, lift during cruise is simultaneously provided by a given main rotor - in powered condition (usually addressed as "hybrid helicopter") or in autorotation ("autogyro" - modus) - and the wings. Higher forward speed is provided by horizontally oriented auxiliary propulsion units of the compound helicopter. The compound helicopter hence overcomes underlying rotor lift limits by means of the wings and underlying rotor thrust limits by means of the propulsion units. As a result, a higher load factor is obtained along with potential for higher speed. In particular, use of a pair of thrust propulsion units - opposed and both offset relative to each other and to a longitudinal axis of the compound helicopter - enables for a simultaneous torque correction.

Exemplary compound helicopters with two wing-mounted propellers defining the above-described propulsion units are described in the documents US 2,665,859 A, EP 2 146 896 A1, EP 2 690 010 B1, EP 2 690 011 A1, EP 3 141 478 B1, EP 3 486 171 A1, and US 2013/0175385 A1. These exemplary compound helicopters are all provided with fixed wing arrangements, as described hereinafter.

The document US 2,665,859 A describes a compound helicopter comprising a fuselage, coaxial contrarotating rotors above the fuselage, fixed wings projecting laterally from the fuselage, twin engines carried in engine nacelles on the wings and propellers providing thrust for forward flight, the engines being arranged to drive alternatively or simultaneously both the rotors and the propellers.

The document EP 2 146 896 A1 describes a compound helicopter with a fixed wing arrangement in the form of a cantilevered wing configuration that comprises pusher propellers that are installed at tips of straight and plane cantilevered wings with associated drive shafts that are respectively housed within the wings. Corresponding housings of the propeller drive shafts that are arranged inside the wings require an underlying wing planform to be straight. Furthermore, the cantilevered wing configuration requires a large wing root thickness and a continuation of wing bending capabilities throughout an upper fuselage deck. In general, such a cantilevered wing configuration comprises straight wings, wherein each of the wings has a constant sweep and constant anhedral.

The document EP 2 690 010 B1 describes a compound helicopter with a main rotor providing lift, a pair of additional propulsion devices providing thrust and anti-torque and a fixed wing structure on each side providing additional lift during horizontal cruise flight. The propulsion devices are arranged at each side of a fuselage body with two tail booms, one arranged at each side of said fuselage body, each of both tail booms having one of both propulsion devices arranged at its boom rear end. Each of the two tail booms houses an engine and a drive shaft driving the corresponding propulsion device.

The document EP 2 690 011 B1 describes a compound helicopter with a fixed wing arrangement in the form of a joint-wing configuration, wherein a lower wing and an upper wing are provided on each side of the compound helicopter. Both wings are essentially straight and interconnected to each other at a wing interconnection region, and a pusher propeller is installed in the interconnection region behind associated trailing edges of both wings. This joint-wing configuration especially outstands by its improved mechanical efficiency in terms of less structural weight and larger stiffness, as well as by improved inherent operational safety characteristics and improved system integration, especially referring to an underlying accessibility of a main gear box of the compound helicopter.

The document EP 3 141 478 B1 describes a compound helicopter with a fuselage and at least one main rotor, said fuselage comprising a lower side and an upper side that is opposed to said lower side, said at least one main rotor being arranged at said upper side, wherein at least one propeller is provided and mounted to a fixed wing arrangement that is laterally attached to said fuselage, said fixed wing arrangement comprising at least one upper wing that is arranged at an upper wing root joint area provided at said upper side of said fuselage and at least one lower wing that is arranged at a lower wing joint area provided at said lower side of said fuselage, said upper and lower wings being at least interconnected at an associated interconnection region.

The document EP 3 486 171 A1 describes a braced wing aircraft with a fuselage and a fixed wing arrangement, the fixed wing arrangement comprising at least two braced wings that are arranged laterally and opposite to each other on the fuselage, each one of the at least two braced wings comprising at least one upper wing and at least one lower wing which are staggered and interconnected at a predetermined transition region, the at least one upper wing being connected to the fuselage at an associated upper wing root and the at least one lower wing being connected to the fuselage at an associated lower wing root.

The document US 2013/0175383 A1 describes another compound helicopter with fixed wing arrangement in the form of a joint-wing configuration having lower and upper wings that are each parallel to a given pitch axis of the compound helicopter. The wings exhibit a constant dihedral and the upper wings entirely cover the lower wings so as to minimize down-wash drag. This translates to a design with same depth of the wings, same wing orientation, and same position of attachment of the upper and lower wings.

However, all of the above-described compound helicopters have drawbacks when used as high-speed helicopters, as their fixed wing arrangements are not optimized with respect to high-speed regime in operation of the compound helicopters. Furthermore, the above described compound helicopters all feature tail booms that have the negative effect on the overall dynamic behavior of the helicopter described above. Moreover, the operational efficiency of these compound helicopters as a whole can be improved.

Document EP 3 385 160 B1 describes a helicopter with a fuselage, a main rotor system connected to the fuselage and configured to rotate in a rotor direction, the main rotor system comprising a retreating rotor blade side and an opposing advancing rotor blade side, and a first wing extending from the fuselage on the retreating rotor blade side. The helicopter comprises no tail rotor system and comprises no counterrotating rotor system coaxial with the main rotor system.

However, the wings of the compound helicopter have a very high span width and are located directly under the main rotor. The very high span width of the wings combined with the location directly under the main rotor leads - especially in hover condition - to highly destructive vibrations in the wings caused by the interference of the main rotor airflow respectively downwash with the wings. Moreover, the very long drive shafts respectively transmission linkages from the main gear box to the rotors mounted on the wing tips lead to very challenging stiffness requirements of the high span wings. Even with electrically powered motors on the wing tips the high span of the wings leads to a negative dynamic behavior of the wings which is even more severe than the dynamic issues typically encountered with tail booms of a conventional helicopter. Furthermore, the suggested architecture is expected to have deficient directional and longitudinal stability performances due to the lack of stabilizing surfaces with respect to the center of gravity of the helicopter.

Document EP 2 690 012 A1 describes a semi-convertible rotorcraft with a main rotor and a pair of additional smaller propellers providing thrust, with a pair of rear-mounted fixed wings and a pair of front-end mounted canard wings providing additional lift. The main rotor is non-tiltable and arranged at an aft area of the fuselage and the propellers are arranged at the tip ends of the canard wings while being tiltable around a pitch axis perpendicular to the roll axis of the semi-convertible rotorcraft.

However, the propellers and their associated motors are mounted at a great distance from the main gearbox, which is mounted close to the main rotor in the rear top portion of the semi-convertible rotorcraft. Therefore, the semi-convertible rotorcraft requires comparably long drive shafts.

It is, therefore, an objective to provide a new compound helicopter that overcomes the above described drawbacks.

This objective is solved by a compound helicopter comprising the features of claim 1. More specifically, a compound helicopter that extends in a longitudinal direction, a transversal direction, and a vertical direction may comprise a fuselage that extends in the longitudinal direction from a front fuselage section to a rear fuselage section and in the vertical direction from a lower fuselage section to an upper fuselage section, at least one main rotor, and a fixed wing arrangement. The at least one main rotor that is arranged at the upper fuselage section and at least adapted for generating lift in operation, may comprise at least two rotor blades that form a main rotor disc during rotation of the at least one main rotor, wherein the main rotor disc defines a compound helicopter perimeter. The fixed wing arrangement that is completely arranged within the compound helicopter perimeter and laterally arranged relative to the fuselage may comprise a rear horizontal plane structure, at least one vertical fin, at least one upper wing, at least one lower wing, and an interconnection section. The rear horizontal plane structure may extend laterally from the rear fuselage section in the transversal direction. The at least one vertical fin may be arranged with a predetermined angle at the rear horizontal plane structure. The at least one upper wing may be connected to the upper fuselage section. The at least one lower wing may be connected to the lower fuselage section and comprise an outboard section and an inboard section, wherein the inboard section is connected to the fuselage and integrally formed with the rear horizontal plane structure, and wherein the outboard section is connected to the inboard section at a lower wing joint area. In the interconnection region, one of the at least one upper wing is connected to an associated one of the at least one lower wing.

In general, the compound helicopter comprises a specific arrangement and planform of an underlying bi-plane wing structure on each side of the compound helicopter, with a main rotor providing lift and a pair of additional propulsion devices, i.e. propellers, providing thrust. The bi-plane wing structure on each side of the compound helicopter provides additional lift during horizontal cruise flight. The additional propulsion devices are arranged on the underlying bi-plane wing structure at the intersections of respective wings, preferentially one at each side of the compound helicopter.

More specifically, a tail boom is absent from the compound helicopter. The empennage that includes the rear horizontal plane and the vertical fins is located within the perimeter of the fuselage of the compound helicopter.

Illustratively, the inboard lower wing portion is extended in rearward direction in order to merge with the rear horizontal plane, hence forming a blended horizontal plane which simultaneously serves as lifting surface and horizontal stabilizing surface.

If desired, a flap, a spoiler and/or a trimming surface may be included at the aft end of the rear horizontal plane. Advantageously, these surfaces can be flapped down, e.g., during hover or vertical flight, in order to reduce down load as an effect of the main rotor downwash interaction.

By way of example, vertical stabilizers are attached to the aft end of the rear horizontal plane structure, and more especially to its distal lateral extremity.

Preferably, the fuselage has a streamlined shape within a sectional contour on a plane intersecting the fuselage at its mid height. If desired, the fuselage may form at its aft end a vertical trailing edge with a sharp edge at its rear end. In other words, the fuselage may adopt a fin-like shape at its rear end.

In order to reduce the downwash disadvantage and to lower the impact of the hot engine exhaust gases, the trailing edge of the rear horizontal plane structure may be split into two sub-surfaces. In that case, the vertical fins may be moved further apart in lateral direction in order to compensate for the loss of horizontal surface associated with the split.

If desired, a dorsal fin may be added at the aft end of the fuselage in form of a continuity of the rear fuselage vertical trailing edge. The dorsal fin may act as a third vertical stabilizing surface in addition to the two vertical fins.

Illustratively, the rear horizontal plane structure may be effectively used as storage compartment of system items, such as main landing gear, floatation balloons, emergency floatation systems, weapons, fuel tanks, etc. The landing gear is preferably arranged at the lower wing root and can be advantageously retracted either in lateral direction or in rearward direction.

Instead of a slim and long conventional tail boom, the compound helicopter features a compact structural arrangement close to the fuselage body. The performance of this arrangement with horizontal and vertical stabilization surfaces is equivalent to a traditional rotorless tail in terms of the longitudinal and directional stability function.

The arrangement with horizontal and vertical stabilizers close to the fuselage requires larger effective horizontal and vertical planes as an effect of the lower effective lever with respect to the helicopter's center of gravity, which leads to a certain increase of weight for the equivalent surfaces. However, the structural simplification with the elimination of the tail boom structure compensates this effect and allows for further simultaneous and synergetic advantages which lead to an overall increase of the helicopter's performance.

The removal of the complete tail boom leads to a smaller footprint of the compound helicopter on the ground. This reduces the risk of collisions between the tail boom and obstacles on the ground behind the vehicle. Moreover, this reduces the loads associated with the tail boom structure and its connection to the fuselage.

Furthermore, on top slope landings, even bigger nose-up angles are possible without ground contact of a tail boom. This opens the possibility for slope landings or auto-rotation.

In addition, there is less interaction between the main rotor wake and horizontal stabilizing surfaces or the empennage during transition flight, leading to an elimination of the so-called tail-shake phenomenon and associated vibrations usually occurring on traditional helicopters with tail booms.

The arrangement of additional surface areas within the main rotor perimeter leads to an increase of wetted area with respect to the downwash from the main rotor. However, the increase in surface areas is allocated in a zone with smaller downwash velocities since these areas are closer to the main rotor mast which relativizes the impact on the resultant down load.

Furthermore, due to the reduced lever arms of the tail surfaces the level of vibration of the aft end of the compound helicopter decreases, especially for horizontal and vertical stabilizers, and the pitch-up effect during transition from vertical to horizontal flight reduces and tends to be smoother.

In addition, the center of gravity (CoG) of the compound helicopter shifts to a more frontward position as a tail boom and any associated systems such as gear boxes, drive shafts, or tail surfaces, just to name a few, have been removed. This is beneficial for a more effective fast forward flight.

Typically, the tail boom volume of a traditional helicopter is unused volume in order to avoid a negative impact to the helicopter's center of gravity. However, the rear horizontal plane structure of the compound helicopter may provide for additional storage volume for landing gear, fuel, and other systems close to the center of gravity.

Furthermore, the newly established horizontal surfaces may serve in several areas as maintenance platforms for engines and inspections in the upper rear fuselage area.

Illustratively, the compound helicopter may have a better aerodynamic behavior of the fuselage at its aft end due to a streamlined body.

Moreover, hot exhaust gases do not impact any tail surface; and a safe rear access of the helicopter is enabled, because the vertical fins serve as natural barriers against lateral rotors.

According to one aspect, the compound helicopter further comprises at least one propeller that is at least adapted for generating forward thrust in operation, wherein one of the at least one propeller is mounted to the interconnection region.

According to one aspect, the fixed wing arrangement further comprises at least a first pair of upper and lower wings arranged on a port side of the compound helicopter; and at least a second pair of upper and lower wings arranged on a starboard side of the compound helicopter, wherein the at least second pair of upper and lower wings comprises the at least one upper wing and the at least one lower wing.

According to one aspect, the rear horizontal plane structure extends laterally from the rear fuselage section in the transversal direction at a port side and at a starboard side of the compound helicopter.

According to one aspect, the rear horizontal plane structure that extends laterally from the rear fuselage section in the transversal direction at the port side of the compound helicopter is connected to the rear horizontal plane structure that extends laterally from the rear fuselage section in the transversal direction at the starboard side of the compound helicopter.

According to one aspect, the rear horizontal plane structure further comprises at least one elevator that is adapted to be movable at least during a forward flight or during hovering.

According to one aspect, the fixed wing arrangement further comprises at least a first vertical fin of the at least one vertical fin that is arranged with the predetermined angle at the rear horizontal plane structure at the port side of the compound helicopter; and at least a second vertical fin of the at least one vertical fin that is arranged with the predetermined angle at the rear horizontal plane structure at the starboard side of the compound helicopter.

According to one aspect, the rear horizontal plane structure comprises a trailing edge at the aft of the fuselage, and the at least first and second vertical fins extend in the longitudinal direction beyond the trailing edge of the rear horizontal plane structure.

According to one aspect, the rear horizontal plane structure has a first end that is attached to the fuselage and a second end that is opposed to the first end, and the at least one vertical fin is arranged with the predetermined angle at the rear horizontal plane structure at the second end.

According to one aspect, the second end is aligned in longitudinal direction with the lower wing joint area.

According to one aspect, the fuselage further comprises a streamlined sectional contour at the connection between the lower fuselage section and the upper fuselage section, wherein the streamlined section contour has a pointed shape at the rear fuselage section.

According to one aspect, the fuselage further comprises a streamlined sectional contour at the connection between the lower fuselage section and the upper fuselage section, wherein the streamlined section contour has a rounded shape at the rear fuselage section.

According to one aspect, the fuselage further comprises a rear fuselage end that has a pointed cross section shape parallel to a plane defined by the longitudinal direction and the transversal direction.

According to one aspect, the fuselage further comprises a dorsal fin that extends from the fuselage in the longitudinal direction and beyond the rear horizontal plane structure.

According to one aspect, the dorsal fin is arranged in the vertical direction above the rear horizontal plane structure.

Preferred embodiments are outlined by way of example in the following description with reference to the attached drawings. In these attached drawings, identical or identically functioning components and elements are labeled with identical reference numbers and characters and are, consequently, only described once in the following description.
- Figure 1 is a diagram of an illustrative compound helicopter seen from above in accordance with some embodiments,
- Figure 2 is a diagram of a side view of the illustrative compound helicopter of Figure 1 in accordance with some embodiments,
- Figure 3 is a diagram of a front view of the illustrative compound helicopter of Figure 1 in accordance with some embodiments,
- Figure 4 is a diagram of a top view of an illustrative compound helicopter with a dorsal fin in accordance with some embodiments,
- Figure 5 is a diagram of a side view of the illustrative compound helicopter of Figure 4 in accordance with some embodiments, and
- Figure 6 is a diagram of a top view of an illustrative compound helicopter with a rounded aft section in accordance with some embodiments.

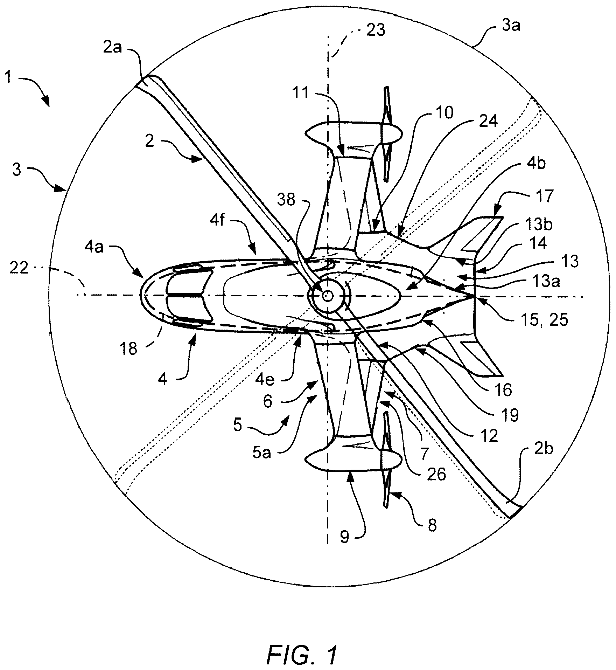

Figure 1 shows an illustrative compound helicopter 1. The compound helicopter 1 is seen from above and extends in a longitudinal direction 22, a transversal direction 23, and a vertical direction 38.

The longitudinal direction 22 corresponds to the roll axis inherent to the compound helicopter 1. The transversal direction 23 is perpendicular to the roll axis and corresponds to the pitch axis of the compound helicopter 1. The plane formed by longitudinal direction 22 and transversal direction 23 is considered to be "horizontal" and corresponds to a top view plane of the compound helicopter 1 as shown in Figure 1. The plane formed by longitudinal direction 22 and transversal direction 23 is sometimes also referred to as the horizontal plane or the X-Y plane.

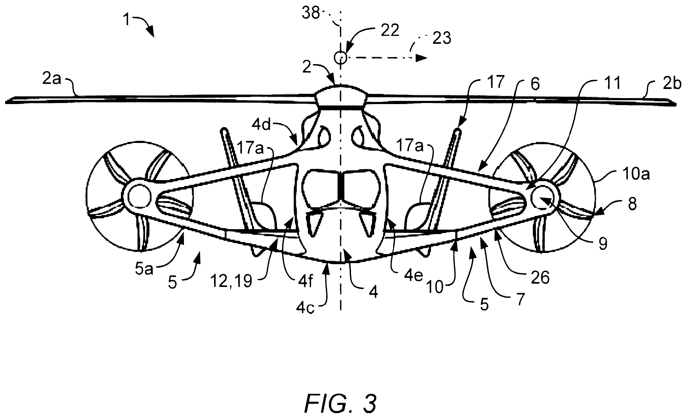

The vertical direction 38 corresponds to the yaw axis of the compound helicopter 1 and is oriented perpendicular with respect to the X-Y plane. The plane formed by transversal direction 23 and vertical direction 38 corresponds to the front view plane of the compound helicopter 1 as illustrated in Figure 3. The plane formed by transversal direction 23 and vertical direction 38 is sometimes also referred to as the Y-Z plane.

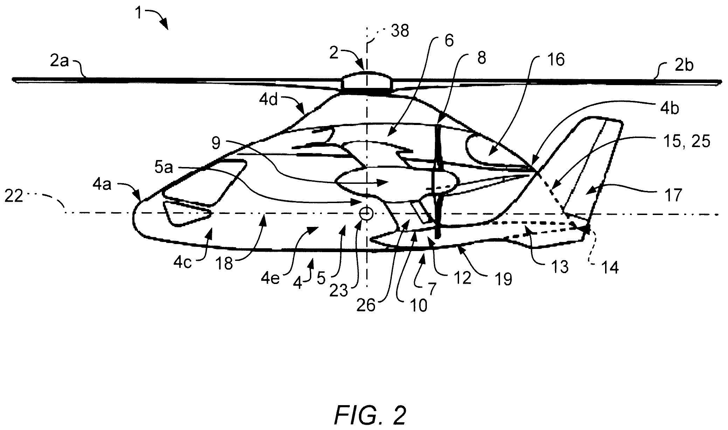

The plane formed by longitudinal direction 22 and vertical direction 38 corresponds to the side view plane of the compound helicopter 1 as illustrated in Figure 2. The plane formed by longitudinal direction 22 and vertical direction 38 is sometimes also referred to as the X-Z plane.

Illustratively, the compound helicopter 1 is symmetrical to a plane formed by the vertical direction 38 and the longitudinal direction 22 (i.e., symmetrical to the X-Z plane). However, the compound helicopter 1 may be unsymmetrical to the X-Z plane, if desired.

Please, note that for the remainder of this description the term extending in the longitudinal direction 22 means that the extension is predominantly in the longitudinal direction 22. However, the extension can in addition also have a predetermined angle with respect to the vertical direction 38 and/or the transversal direction 23. As an example, an object with an extension that deviates between ±45° from the longitudinal direction 22 may be called an object that extends in the longitudinal direction 22.

Similarly, the term extending in the transversal direction 23 means that the extension is predominantly in the transversal direction 23. However, the extension can in addition also have a predetermined angle with respect to the vertical direction 38 and/or the longitudinal direction 22. As an example, an object with an extension that deviates between ±45° from transversal direction 23 may be called an object that extends in the transversal direction 23.

Moreover, the term extending in the vertical direction 38 means that the extension is predominantly in the vertical direction 38. However, the extension can in addition also have a predetermined angle with respect to the transversal direction 23 and/or the longitudinal direction 22. As an example, an object with an extension that deviates between ±45° from vertical direction 38 may be called an object that extends in the vertical direction 38.

Compound helicopter 1 may include a fuselage 4. Fuselage 4 may extend in the longitudinal direction 22 from a front fuselage section 4a to a rear fuselage section 4b. As shown in Figure 2, fuselage 4 also extends in the vertical direction 38 from a lower fuselage section 4c to an upper fuselage section 4d. In the transversal direction 23, fuselage 4 may extend between a port side 4e and a starboard side 4f.

At the aft, fuselage 4 may have a rear fuselage trailing edge 25 with a rear fuselage end 15. If desired, the rear fuselage trailing edge 25 may have a sharp edge at the rear fuselage end 15. In other words, the rear fuselage end 15 may have a pointed cross section shape parallel to a plane defined by the longitudinal direction 22 and the transversal direction 23 (i.e., in the X-Y plane), thereby adopting a fin-like shape at the rear fuselage end 15.

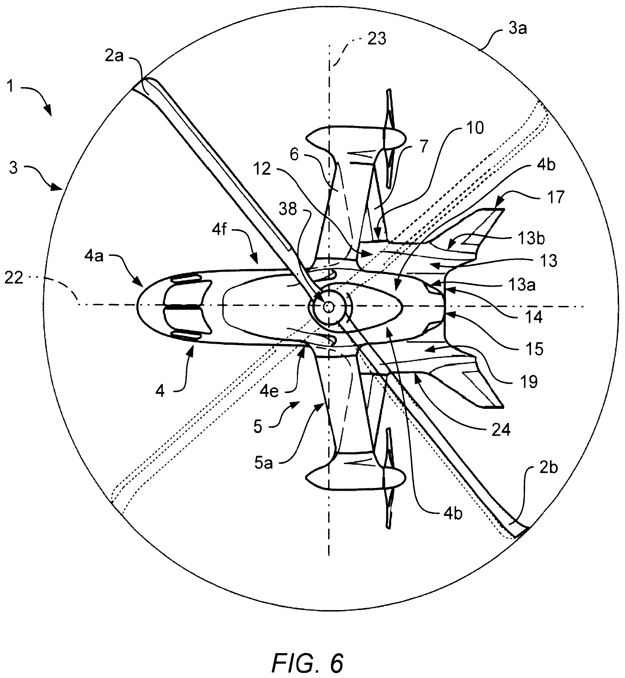

Fuselage 4 may have a streamlined sectional contour 18 at the connection between the lower fuselage section and the upper fuselage section (e.g., lower and upper fuselage sections 4c, 4d of Figure 2). As shown in Figure 1, the streamlined section contour 18 has a pointed shape at the rear fuselage section 4b. If desired, the streamlined section contour 18 may have a rounded shape at the rear fuselage section 4b (e.g., as shown in Figure 6).

Illustratively, compound helicopter 1 may comprise at least one main rotor 2 that is at least adapted for generating lift in operation. The at least one main rotor 2 may be arranged at the upper fuselage section 4d. If desired, an engine exhaust 16 of the engine that drives the at least one main rotor 2 may be arranged at the upper fuselage section.

By way of example, the at least one main rotor 2 may include at least two rotor blades 2a, 2b. The at least two rotor blades 2a, 2b may form a main rotor disc 3 during rotation of the at least one main rotor 2.

Consider the scenario in which the at least one main rotor 2 has a rotor mast around which the at least two rotor blades 2a, 2b rotate. The main rotor disc 3 may have a center that is defined by the rotor mast of the at least one main rotor 2 and a radius that is defined by the distance from the center to a tip of one of the at least two rotor blades 2a, 2b.

If desired, the main rotor disc 3 may define a compound helicopter perimeter 3a. For example, a perpendicular projection of the entire compound helicopter 1 in the X-Y plane may fit (i.e., may lie entirely) within a perpendicular projection of the main rotor disc 3 in the X-Y plane.

As shown in Figure 1, compound helicopter 1 may include a fixed wing arrangement 5. As an example, fixed wing arrangement 5 may be laterally arranged relative to the fuselage 4.

Fixed wing arrangement 5 may be completely arranged within the compound helicopter perimeter 3a. If desired, a perpendicular projection of the fixed wing arrangement 5 in the X-Y plane may fit within the main rotor disc 3.

Illustratively, the fixed wing arrangement 5 may include a rear horizontal plane structure 13. Rear horizontal plane structure 13 may extend laterally from the rear fuselage section 4b in the transversal direction 23.

As shown, rear horizontal plane structure 13 may extend laterally from fuselage 4 at a lower fuselage section (e.g., lower fuselage section 4c of Figure 2). If desired, rear horizontal plane structure 13 may extend laterally from fuselage 4 at an upper fuselage section (e.g., upper fuselage section 4d of Figure 2).

By way of example, the rear horizontal plane structure 13 may extend laterally from the rear fuselage section 4b in the transversal direction 23 at the port side 4e and at the starboard side 4f of the compound helicopter 1. The rear horizontal plane structure 13 may include a trailing edge 14 at the aft of the fuselage 4.

If desired, the rear horizontal plane structure 13 that extends laterally from the rear fuselage section 4b in the transversal direction 23 at the port side 4e of the compound helicopter 1 may be connected to the rear horizontal plane structure 13 that extends laterally from the rear fuselage section 4b in the transversal direction 23 at the starboard side 4f of the compound helicopter 1.

Illustratively, the fixed wing arrangement 5 may include at least one vertical fin 17. The at least one vertical fin 17 may be arranged with a predetermined angle (e.g., predetermined angle 17a of Figure 3) at the rear horizontal plane structure 13. If desired, the at least one vertical fin 17 may extend from the rear horizontal plane structure 13 in a vertical direction 38.

As an example, the fixed wing arrangement 5 may include at least a first vertical fin 17 at the port side 4e of compound helicopter 1 and at least a second vertical fin 17 at the starboard side 4f of compound helicopter 1. If desired, the at least first and second vertical fins 17 may extend in the longitudinal direction 22 beyond the trailing edge 14 of the rear horizontal plane structure 13.

As another example, the fixed wing arrangement 5 may include more than one vertical fin at the port side 4e and more than one vertical fin at the starboard side 4f of compound helicopter 1.

The at least one vertical fin 17 may be attached to the rear horizontal plane structure 13. If desired, the at least one vertical fin 17 may be an integral part of the rear horizontal plane structure 13.

Illustratively, the rear horizontal plane structure 13 has a first end 13a that is attached to the fuselage 4 and a second end 13b that is opposed to the first end 13a. The second end 13b may be aligned in longitudinal direction 22 with the lower wing joint area 10. If desired, the at least one vertical fin 17 may be arranged with a predetermined angle at the rear horizontal plane structure 13 at the second end 13b.

As an example, at least some of the at least one vertical fin 17 may extend upwards from the rear horizontal plane structure 13. As another example, at least some of the at least one vertical fin 17 may extend downwards from the rear horizontal plane structure 13. As yet another example, at least some of the at least one vertical fin 17 may extend up- and downwards from the rear horizontal plane structure 13. In some embodiments, the at least one vertical fin 17 may include a combination of a first set of vertical fins that extend upwards from the rear horizontal plane structure 13, a second set of vertical fins that extend downwards from the rear horizontal plane structure 13, and/or a third set of vertical fins that extend up- and downwards from the rear horizontal plane structure 13.

If desired, the fixed wing arrangement 5 may include at least one upper wing 6 and at least one lower wing 7. The at least one upper wing 6 may be connected to the upper fuselage section 4d at an upper wing joint area. The at least one lower wing 7 may be connected to the lower fuselage section 4c.

The at least one lower wing 7 may include an outboard section 26 and an inboard section 12. The outboard section 26 may be connected to the inboard section 12 at a lower wing joint area 10. If desired, outboard section 26 and inboard section 12 may integrally form the at least one lower wing 7.

The inboard section 12 of the at least one lower wing 7 may be connected to the fuselage 4. Illustratively, the inboard section 12 is an integral part of the fuselage 4.

The inboard section 12 may have a rearward inboard wing extension 24. The rearward inboard wing extension 24 may connect the inboard section 12 with the rear horizontal plane structure 13. If desired, the inboard section 12 and the rear horizontal plane structure 13 may form a blended horizontal plane 19. The blended horizontal plane 19 may be connected with the lower fuselage section 4c. If desired, the inboard section 12, the rearward inboard wing extension 24, and the rear horizontal plane structure 13 may be integrally formed.

In the illustrated Y-Z plane, a predetermined distance in vertical direction 38 between both the lower wing joint area 10 and the upper wing root joint area may define a transversal wing attachment basis.

By way of example, the fixed wing arrangement 5 comprises at least one pair of upper and lower wings 6, 7 arranged on a port side 4e of the compound helicopter 1 and at least one pair of upper and lower wings 6, 7 arranged on a starboard side 4f of the compound helicopter 1. At least one pair of upper and lower wings 6, 7 arranged on the starboard side 4f and/or on the port side 4e of the compound helicopter 1 comprises the at least one upper wing 6 and the at least one lower wing 7.

Illustratively, one of the at least one upper wing 6 is connected to an associated one of the at least one lower wing 7 in an interconnection region 11. Thus, one of the at least one upper wing 6 and an associated one of the at least one lower wing 7 may form a joint wing 5a.

By way of example, compound helicopter 1 may include at least one propeller 8. The at least one propeller 8 may at least be adapted for generating forward thrust in operation. The at least one propeller 8 may be mounted to fixed wing arrangement 5. For example, the at least one propeller 8 may be mounted to the interconnection region 11.

Illustratively, the compound helicopter 1 comprises two propellers 8, one on each side of the fuselage 4. Each one of the propellers 8 may comprise a housing 9 that is rigidly attached to an associated one of the interconnection regions 11. If desired, at least one of the two propellers 8 is mounted to the associated interconnection region 11 of upper and lower wings 6, 7.

Each one of the two propellers 8 may be powered by an associated propeller drive shaft. The propeller drive shaft may be housed within the upper wing 6 and connect a main gear box of the compound helicopter 1, illustratively arranged in the upper fuselage section 4d, with a respective propeller gear box.

Figure 2 is a diagram of a side view of the illustrative compound helicopter of Figure 1 in accordance with some embodiments. In particular, Figure 2 shows the port side of illustrative compound helicopter 1 of Figure 1.

As described above with reference to Figure 1, the compound helicopter 1 may include at least one main rotor 2, a fuselage 4, a fixed wing arrangement 5, and at least one propeller 8.

Illustratively, the at least one main rotor 2 may be arranged at the upper fuselage section 4d. The at least one main rotor 2 may at least be adapted for generating lift in operation. The at least one main rotor 2 may include at least two rotor blades 2a, 2b.

The distance between the tips of the at least two rotor blades 2a, 2b may correspond to the diameter of a main rotor disc (e.g., main rotor disc 3 of Figure 1) that the at least two rotor blades 2a, 2b form during rotation of the at least one main rotor 2. The main rotor disc may define a compound helicopter perimeter.

The fixed wing arrangement 5 may be completely arranged within the compound helicopter perimeter. The fixed wing arrangement 5 may be laterally arranged relative to the fuselage 4. Hence, Figure 2 shows the portion of the fixed wing arrangement 5 that is arranged on the port side 4e of compound helicopter 1.

Illustratively, the fixed wing arrangement 5 comprises upper and lower wings 6, 7. By way of example, the fixed wing arrangement 5 may include a rear horizontal plane structure 13. The lower wing 7 may be composed of an inboard section 12 and an outboard section 26. The inboard section 12 and the rear horizontal plane structure 13 may form a blended horizontal plane 19. The blended horizontal plane 19 may be connected with the lower fuselage section 4c and extend along the rear fuselage section 4b.

If desired, the upper wing 6 may be removably attached to an upper wing root joint area in the upper fuselage section 4d by means of a hinged root joint.

Illustratively, the upper wing 6 and lower wing 7 may show a positive stagger, with a leading edge of the upper wing 6 being ahead of corresponding leading edges of the inboard section 12 and the outboard section 26 of the lower wing 7. The stagger is defined as a difference in longitudinal position of the axis of two wings of the compound helicopter 1.

The fixed wing arrangement 5 may include an interconnection region 11, in which one of the at least one upper wing 6 is connected to an associated one of the at least one lower wing 7. Each one of the at least one propeller 8 may comprise a propeller housing (e.g., propeller housing 9 of Figure 1) that is rigidly attached to an associated one of interconnection regions 11.

Illustratively, the fixed wing arrangement 5 may include a rear horizontal plane structure 13 that extends laterally from the rear fuselage section 4b in the transversal direction 23. The rear horizontal plane structure 13 may include a trailing edge 14 at the aft of the fuselage 4. The at least one lower wing 7 may merge with the rear horizontal plane structure 13, if desired.

By way of example, the fixed wing arrangement may include at least one vertical fin 17 that is arranged with a predetermined angle at the rear horizontal plane structure 13. If desired, the at least one vertical fin 17 extends in the longitudinal direction 22 beyond the trailing edge 14 of the rear horizontal plane structure 13.

Figure 3 is a diagram of a front view of the illustrative compound helicopter of Figure 1 in accordance with some embodiments.

As described above with reference to Figure 1, the compound helicopter 1 may include at least one main rotor 2, a fuselage 4, a fixed wing arrangement 5, and at least one propeller 8.

Illustratively, the at least one main rotor 2 may be arranged at the upper fuselage section 4d. The at least one main rotor 2 may at least be adapted for generating lift in operation. The at least one main rotor 2 may include at least two rotor blades 2a, 2b.

The distance between the tips of the at least two rotor blades 2a, 2b may correspond to the diameter of a main rotor disc (e.g., main rotor disc 3 of Figure 1) that the at least two rotor blades 2a, 2b form during rotation of the at least one main rotor 2. The main rotor disc may define a compound helicopter perimeter.

The fixed wing arrangement 5 may be completely arranged within the compound helicopter perimeter. In other words, the maximum distance of any portion of the fixed wing arrangement 5 in longitudinal direction 22 from the main rotor mast may be smaller than the length of the longest of the at least two rotor blades 2a, 2b; and the maximum distance of any portion of the fixed wing arrangement 5 in transversal direction 23 from the main rotor mast may be smaller than the length of the longest of the at least two rotor blades 2a, 2b.

The fixed wing arrangement may include at least one vertical fin, at least one upper wing 6, at least one lower wing 7, and an interconnection region 11 in which one of the at least one upper wing 6 is connected to an associated one of the at least one lower wing 7.

Illustratively, the compound helicopter 1 may include at least one propeller 8 that is at least adapted for generating forward thrust in operation. One of the at least one propeller 8 may be mounted to the interconnection region 11, if desired.

As shown in Figure 3, compound helicopter 1 may include a fixed wing arrangement 5 with at least a first pair of upper and lower wings 6, 7 arranged on the port side 4e of the compound helicopter 1 and at least a second pair of upper and lower wings 6, 7 arranged on the starboard side 4f of the compound helicopter 1.

The respective upper wings 6 (i.e., the upper wing 6 on the port side 4e and the upper wing 6 on the starboard side 4f of compound helicopter 1) may be connected to the upper fuselage section 4d. If desired, the respective upper wings 6 may be removably attached to the upper wing root joint area by means of a hinged root joint.

The respective lower wings 7 (i.e., the lower wing 7 on the port side 4e and the lower wing 7 on the starboard side 4f of compound helicopter 1) may be connected to the lower fuselage section 4c of compound helicopter 1.

The respective lower wings 7 may include an outboard section 26 and an inboard section 12. The outboard section 26 may be connected to the inboard section 12 at a lower wing joint area 10.

The inboard section 12 may be connected to the fuselage 4 at the lower fuselage section 4c. If desired, the inboard section 12 may be integrally formed with fuselage 4.

The fixed wing arrangement 5 may include a rear horizontal plane structure (e.g., rear horizontal plane structure 13 of Figure 1). If desired, the inboard section 12 and the rear horizontal plane structure may form a blended horizontal plane. The blended horizontal plane may be connected with the lower fuselage section 4c. If desired, the blended horizontal plane may be integrally formed with fuselage 4.

If desired, the outboard section 26 may be removably attached to the inboard section 12 at the lower wing joint area 10, and/or the upper wing 6 may be removably attached to the upper wing root joint area. For example, the outboard section 26 may be removably attached to the inboard section 12 at the lower wing joint area 10 by means of a hinged joint or a clamped joint.

As an example, the outboard section 26 may include wing spars and the fuselage 4 may be provided with wing attachment frames, and the hinged joint or the clamped joint may connect the wing spars to the wing attachment frames.

Illustratively, the inboard section 12 is at least essentially horizontal, whereas the outboard section 26 is at least essentially inclined upwardly, such that the lower wing joint area 10 preferably defines a dihedral kink of the lower wing 7.

The at least first and second pairs of upper and lower wings 6, 7 may each be connected with each other in an associated interconnection region 11. Thus, compound helicopter may have a first interconnection region 11 on the port side 4e and a second interconnection region 11 on the starboard side 4f of compound helicopter 1.

As shown in Figure 3, compound helicopter 1 may include a first propeller 8 of the at least one propeller 8 that is mounted to the interconnection region 11 on the port side 4e of the compound helicopter 1 and a second propeller 8 of the at least one propeller 8 that is mounted to the interconnection region 11 on the starboard side 4f of the compound helicopter 1.

Illustratively, each one of the first and second propellers 8 comprises a propeller housing 9. The propeller housing 9 may be rigidly attached to an associated one of the interconnection regions 11.

Each propeller 8 of the at least one propeller 8 may have an associated propeller disc 10a. It should be noted that it is required for a safe operation of the compound helicopter 1 to maintain on the one hand a specified clearance between the ground and propeller disc 10a, and on the other hand a specified clearance between the at least one main rotor 3 and the propeller disc 10a.

According to one aspect, the compound helicopter 1 may include a wheel-type main landing gear. The wheel-type main landing gear may be mounted to the inboard section 12 of the lower wing 7, preferentially adjacent to the lower wing joint area 10. If desired, the wheel-type main landing gear 28 may at least be partly retractable into the inboard section 12 in operation of the compound helicopter 1.

Illustratively, the compound helicopter 1 comprises a wheel-type nose landing gear. The wheel-type nose landing gear may be arranged at a front fuselage section (e.g., front fuselage section 4a of Figure 1). In other words, the wheel-type nose landing gear may be arranged in front of the main landing gear.

It should be noted that it is required for a safe operation of the compound helicopter 1 to maintain a specified clearance between a given contact point of the main landing gear with the ground and propeller disc 10a.

As shown in Figure 1, the fixed wing arrangement may include a rear horizontal plane structure 13 that extends laterally from the rear fuselage section 4b in the transversal direction 23 and at least one vertical fin 17. The at least one vertical fin may be arranged with a predetermined angle 17a at the rear horizontal plane structure 13.

As shown in Figure 3, the fixed wing arrangement may include at least a first vertical fin 17 of the at least one vertical fin 17 that is arranged with the predetermined angle 17a at the rear horizontal plane structure 13 at the port side 4e of the compound helicopter 1 and at least a second vertical fin 17 of the at least one vertical fin 17 that is arranged with the predetermined angle 17a at the rear horizontal plane structure 13 at the starboard side 4f of the compound helicopter 1.

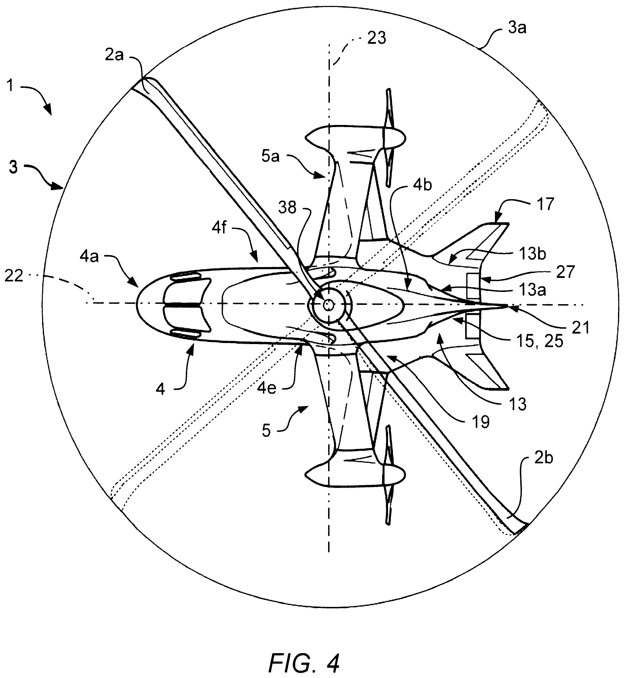

Figure 4 is a diagram of a top view of an illustrative compound helicopter with a dorsal fin in accordance with some embodiments. As shown in Figure 4, compound helicopter 1 may include a fuselage 4. Fuselage 4 may extend in the longitudinal direction 22 from a front fuselage section 4a to a rear fuselage section 4b and in the transversal direction 23, fuselage 4 between a port side 4e and a starboard side 4f.

At the aft, fuselage 4 may have a rear fuselage trailing edge 25 with a rear fuselage end 15. If desired, the rear fuselage trailing edge 25 may have a sharp edge at the rear fuselage end 15. In other words, the rear fuselage end 15 may have a pointed cross section shape parallel to a plane defined by the longitudinal direction 22 and the transversal direction 23 (i.e., in the X-Y plane), thereby adopting a fin-like shape at the rear fuselage end 15.

Illustratively, fuselage 4 may include a dorsal fin 21 that extends from the fuselage 4 in the longitudinal direction 22. If desired, dorsal fin 21 may be a continuation of the rear fuselage trailing edge 25. Dorsal fin 21 may be integrally formed with fuselage 4.

Compound helicopter 1 may comprise at least one main rotor 2 that is at least adapted for generating lift in operation. By way of example, the at least one main rotor 2 may include at least two rotor blades 2a, 2b. The at least two rotor blades 2a, 2b may form a main rotor disc 3 during rotation of the at least one main rotor 2.

If desired, the main rotor disc 3 may define a compound helicopter perimeter 3a. For example, a perpendicular projection of the entire compound helicopter 1 in the X-Y plane may fit (i.e., may lie entirely) within a perpendicular projection of the main rotor disc 3 in the X-Y plane.

Illustratively, compound helicopter 1 may include a fixed wing arrangement 5. As an example, fixed wing arrangement 5 may be laterally arranged relative to the fuselage 4.

Fixed wing arrangement 5 may be completely arranged within the compound helicopter perimeter 3a. If desired, a perpendicular projection of the fixed wing arrangement 5 in the X-Y plane may fit within the main rotor disc 3.

Illustratively, the fixed wing arrangement 5 may include a rear horizontal plane structure 13. Rear horizontal plane structure 13 may extend laterally from the rear fuselage section 4b in the transversal direction 23. If desired, rear horizontal plane structure 13 may form a single plane together with at least a portion of the at least one lower wing 7.

By way of example, rear horizontal plane structure 13 may include at least one elevator 27. The at least one elevator 27 may provide for control and trim surfaces. The at least one elevator 27 may be adapted to be at least movable during a forward flight and hovering.

If desired, dorsal fin 21 may extend from the fuselage 4 in the longitudinal direction 22 and beyond the rear horizontal plane structure 13. Dorsal fin 21 may be completely arranged within the compound helicopter perimeter 3a.

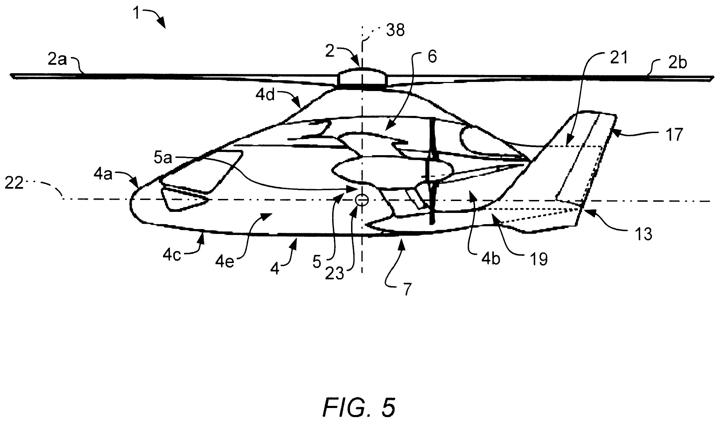

Figure 5 is a diagram of a side view of the illustrative compound helicopter 1 of Figure 4 in accordance with some embodiments.

Compound helicopter 1 may include a fixed wing arrangement 5. Illustratively, the fixed wing arrangement 5 comprises at least one vertical fin 17, rear horizontal plane structure 13, and at least one pair of upper and lower wings 6, 7. A pair of upper wing 6 and lower wing 7 may form a joint wing 5a.

Illustratively, joint wing 5a may show a positive stagger, with a leading edge of the upper wing 6 being ahead of the corresponding leading edge of the lower wing 7. In other words, a stagger is defined as a difference in longitudinal direction 22 of two wings of the compound helicopter 1.

By way of example, compound helicopter 1 may include a fuselage 4 with a dorsal fin 21. Dorsal fin 21 may extend from the fuselage 4 along the longitudinal direction 22 and beyond the rear horizontal plane structure 13. Dorsal fin 21 is shown in Figure 5 by dashed lines behind the vertical fin 17. Illustratively, dorsal fin 21 may be arranged in the vertical direction 38 above the rear horizontal plane structure 13.

Figure 6 is a diagram of a top view of an illustrative compound helicopter with a rounded aft section in accordance with some embodiments.

Figure 6 shows a compound helicopter 1 with a fuselage 4, at least one main rotor 2, a fixed wing arrangement 5 and two propellers 8. The fixed wing arrangement 5 may include vertical fins 17, a rear horizontal plane structure 13, and upper and lower wings 6, 7. Lower wing 7 may be composed of an inboard section 12 and an outboard section 26 that are connected with each other at a lower wing joint area 10.

Fuselage 4 may have a streamlined sectional contour (e.g., streamlined sectional contour 18 of Figure 1) at the connection between the lower fuselage section and the upper fuselage section (e.g., lower and upper fuselage sections 4c, 4d of Figure 2). As shown in Figure 1, the streamlined section contour 18 has a pointed shape at the rear fuselage section 4b. However, in contrast to Figure 1, the streamlined section contour of compound helicopter 1 of Figure 6 may have a rounded shape at the rear fuselage section 4b.

In other words, the rear fuselage end 15 may have a rounded cross section shape parallel to a plane defined by the longitudinal direction 22 and the transversal direction 23 (i.e., in the X-Y plane).

As shown in Figure 6, the rear horizontal plane structure 13 may have a first end 13a that is attached to the fuselage 4 and a second end 13b that is opposed to the first end 13a. Each one of the vertical fins 17 may be arranged with the predetermined angle (e.g., predetermined angle 17a of Figure 3) at the rear horizontal plane structure 13 at the second end 13b.

Illustratively, the second end 13b is aligned in longitudinal direction 22 with the lower wing joint area 10. In other words, the vertical fins 17 of compound helicopter 1 of Figure 6 may be further apart from each other than the vertical fins 17 of compound helicopter 1 of Figure 1.

By way of example, the trailing edge 14 that defines the aft of the rear horizontal plane structure 13 may extend in longitudinal direction beyond the rear fuselage end 15. If desired, the vertical fins 17 may extend in longitudinal direction 22 beyond the rear fuselage end 15 and the trailing edge 14.

It should be noted that modifications to the above described embodiments are within the common knowledge of the person skilled in the art and, thus, also considered as being part of the present invention, which is limited only by the scope of the appended claims.

For example, compound helicopter 1 of Figure 6 is shown with a rounded aft section and no dorsal fin. However, if desired, compound helicopter 1 of Figure 6 may have a dorsal fin such as dorsal fin 21 of Figure 4. The dorsal fin may be mounted to an upper fuselage section of the compound helicopter 1.

Moreover, rear horizontal plane structure 13 of Figure 1 is shown without elevators. However, rear horizontal plane structure 13 of Figure 1 may have elevators similar to the elevators 27 of Figure 4, if desired.

### Reference List

- 1: Compound helicopter
- 2: Main Rotor
- 2a, 2b: Rotor blade
- 3: Main Rotor Disc
- 3a: Compound helicopter perimeter
- 4: Fuselage
- 4a: Front fuselage section
- 4b: Rear fuselage section
- 4c: Lower fuselage section
- 4d: Upper fuselage section
- 4e: Port side
- 4f: Starboard side
- 5: Fixed wing arrangement
- 5a: Joint wing
- 6: Upper wing
- 7: Lower wing
- 8: Propeller
- 9: Propeller housing
- 10: Lower wing joint area
- 10a: Propeller disc
- 11: Interconnection region of upper and lower wing
- 12: Lower wing inboard section
- 13: Rear horizontal plane structure
- 13a: First end
- 13b: Second end
- 14: Trailing edge
- 15: Rear fuselage end
- 16: Engine exhaust
- 17: Vertical fin
- 17a: Predetermined angle
- 18: Sectional contour of the fuselage
- 19: Blended horizontal plane
- 21: Dorsal fin
- 22: Longitudinal direction
- 23: Transversal direction
- 24: Rearward inboard lower wing extension
- 25: Rear fuselage vertical trailing edge
- 26: Lower wing outboard section
- 27: Elevator
- 38: Vertical direction

## Claims

1. A compound helicopter (1) that extends in a longitudinal direction (22), a transversal direction (23), and a vertical direction (38), comprising:
a fuselage (4) that extends in the longitudinal direction (22) from a front fuselage section (4a) to a rear fuselage section (4b), and in the vertical direction (38) from a lower fuselage section (4c) to an upper fuselage section (4d);
at least one main rotor (2) that is arranged at the upper fuselage section (4d) and at least adapted for generating lift in operation, the at least one main rotor (2) comprising:
at least two rotor blades (2a, 2b) that form a main rotor disc (3) during rotation of the at least one main rotor (2), wherein the main rotor disc (3) defines a compound helicopter perimeter (3a); and
a fixed wing arrangement (5) that is completely arranged within the compound helicopter perimeter (3a) and laterally arranged relative to the fuselage (4), the fixed wing arrangement (5) comprising:
a rear horizontal plane structure (13) that extends laterally from the rear fuselage section (4b) in the transversal direction (23),
at least one vertical fin (17) that is arranged with a predetermined angle (17a) at the rear horizontal plane structure (13),
at least one upper wing (6) that is connected to the upper fuselage section (4d),
at least one lower wing (7) that is connected to the lower fuselage section (4c) and comprises an outboard section (26) and an inboard section (12), wherein the inboard section (12) is connected to the fuselage (4) and integrally formed with the rear horizontal plane structure (13), and wherein the outboard section (26) is connected to the inboard section (12) at a lower wing joint area (10), and
an interconnection region (11), in which one of the at least one upper wing (6) is connected to an associated one of the at least one lower wing (7).

2. The compound helicopter (1) of claim 1, further comprising:
at least one propeller (8) that is at least adapted for generating forward thrust in operation, wherein one of the at least one propeller (8) is mounted to the interconnection region (11).

3. The compound helicopter (1) of claim 1 or 2, wherein the fixed wing arrangement (5) further comprises:
at least a first pair of upper and lower wings (6, 7) arranged on a port side (4e) of the compound helicopter (1); and
at least a second pair of upper and lower wings (6, 7) arranged on a starboard side (4f) of the compound helicopter (1), wherein the at least second pair of upper and lower wings (6, 7) comprises the at least one upper wing (6) and the at least one lower wing (7).

4. The compound helicopter (1) of claim 1 or 2, wherein the rear horizontal plane structure (13) extends laterally from the rear fuselage section (4b) in the transversal direction (23) at a port side (4e) and at a starboard side (4f) of the compound helicopter (1).

5. The compound helicopter (1) of claim 4, wherein the rear horizontal plane structure (13) that extends laterally from the rear fuselage section (4b) in the transversal direction (23) at the port side (4e) of the compound helicopter (1) is connected to the rear horizontal plane structure (13) that extends laterally from the rear fuselage section (4b) in the transversal direction (23) at the starboard side (4f) of the compound helicopter (1).

6. The compound helicopter (1) of claim 4, wherein the rear horizontal plane structure (13) further comprises:
at least one elevator (27) that is adapted to be movable at least during a forward flight or during hovering.

7. The compound helicopter (1) of claim 4, wherein the fixed wing arrangement (5) further comprises:
at least a first vertical fin (17) of the at least one vertical fin (17) that is arranged with the predetermined angle (17a) at the rear horizontal plane structure (13) at the port side (4e) of the compound helicopter (1); and
at least a second vertical fin (17) of the at least one vertical fin (17) that is arranged with the predetermined angle (17a) at the rear horizontal plane structure (13) at the starboard side (4f) of the compound helicopter (1).

8. The compound helicopter (1) of claim 7, wherein the rear horizontal plane structure (13) comprises a trailing edge (14) at the aft of the fuselage (4), and wherein the at least first and second vertical fins (17) extend in the longitudinal direction (22) beyond the trailing edge (14) of the rear horizontal plane structure (13).

9. The compound helicopter (1) of any one of the preceding claims, wherein the rear horizontal plane structure (13) has a first end (13a) that is attached to the fuselage (4) and a second end (13b) that is opposed to the first end (13a), and wherein the at least one vertical fin (17) is arranged with the predetermined angle (17a) at the rear horizontal plane structure (13) at the second end (13b).

10. The compound helicopter (1) of claim 9, wherein the second end (13b) is aligned in longitudinal direction (22) with the lower wing joint area (10).

11. The compound helicopter (1) of any one of the preceding claims, wherein the fuselage (4) further comprises:
a streamlined sectional contour (18) at the connection between the lower fuselage section (4c) and the upper fuselage section (4d), wherein the streamlined section contour (18) has a pointed shape at the rear fuselage section (4b).

12. The compound helicopter (1) of any one of claims 1 to 10, wherein the fuselage (4) further comprises:
a streamlined sectional contour (18) at the connection between the lower fuselage section (4c) and the upper fuselage section (4d), wherein the streamlined section contour (18) has a rounded shape at the rear fuselage section (4b).

13. The compound helicopter (1) of any one of the preceding claims, wherein the fuselage further comprises:
a rear fuselage end (15) that has a pointed cross section shape parallel to a plane defined by the longitudinal direction (22) and the transversal direction (23).

14. The compound helicopter (1) of any one of the preceding claims, wherein the fuselage (4) further comprises:
a dorsal fin (21) that extends from the fuselage (4) in the longitudinal direction (22) and beyond the rear horizontal plane structure (13).

15. The compound helicopter (1) of claim 14, wherein the dorsal fin (21) is arranged in the vertical direction (38) above the rear horizontal plane structure (13).

## Patentansprüche

1. Flugschrauber (1), der sich in einer Längsrichtung (22), einer Querrichtung (23) und einer Vertikalrichtung (38) ausdehnt, umfassend:
einen Rumpf (4), der sich in der Längsrichtung (22) von einem vorderen Rumpfabschnitt (4a) zu einem hinteren Rumpfabschnitt (4b) und in der Vertikalrichtung (38) von einem unteren Rumpfabschnitt (4c) zu einem oberen Rumpfabschnitt (4d) erstreckt;
mindestens einen Hauptrotor (2), der an dem oberen Rumpfabschnitt (4d) angeordnet ist und zumindest zur Erzeugung von Auftrieb im Betrieb eingerichtet ist, wobei der mindestens eine Hauptrotor (2) umfasst:
mindestens zwei Rotorblätter (2a, 2b), die bei Rotation des mindestens einen Hauptrotors (2) eine Hauptrotorscheibe (3) bilden, wobei die Hauptrotorscheibe (3) einen Flugschrauberumfang (3a) definiert; und
eine Festflügelanordnung (5), die vollständig innerhalb des Flugschrauberumfangs (3a) und seitlich relativ zum Rumpf (4) angeordnet ist, wobei die Festflügelanordnung (5) umfasst:
eine hintere horizontale Flächenstruktur (13), die sich vom hinteren Rumpfabschnitt (4b) in Querrichtung (23) seitwärts erstreckt,
mindestens ein Seitenleitwerk (17), das mit einem vorgegebenen Winkel (17a) an der hinteren horizontalen Flächenstruktur (13) angeordnet ist,
mindestens einen oberen Flügel (6), der mit dem oberen Rumpfabschnitt (4d) verbunden ist,
mindestens einen unteren Flügel (7), der mit dem unteren Rumpfabschnitt (4c) verbunden ist und einen Außenabschnitt (26) und einen Innenabschnitt (12) umfasst, wobei der Innenabschnitt (12) mit dem Rumpf (4) verbunden und einstückig mit der hinteren horizontalen Flächenstruktur (13) ausgebildet ist, und wobei der Außenabschnitt (26) mit dem Innenabschnitt (12) an einem unteren Flügelverbindungsbereich (10) verbunden ist, und
einen Verbindungsbereich (11), in dem einer der mindestens eins oberen Flügel (6) mit einem zugeordneten der mindestens eins unteren Flügel (7) verbunden ist.

2. Flugschrauber (1) nach Anspruch 1, der ferner umfasst:
mindestens einen Propeller (8), der zumindest zur Erzeugung von Vorwärtsschub im Betrieb eingerichtet ist, wobei einer der mindestens eins Propeller (8) an dem Verbindungsbereich (11) angebracht ist.

3. Flugschrauber (1) nach Anspruch 1, bei dem die Festflügelanordnung (5) ferner umfasst:
mindestens ein erstes Paar von oberen und unteren Flügeln (6, 7), die an einer Backbordseite (4e) des Flugschraubers (1) angeordnet sind; und
mindestens ein zweites Paar von oberen und unteren Flügeln (6, 7), die auf einer Steuerbordseite (4f) des Flugschraubers (1) angeordnet sind, wobei das mindestens zweite Paar von oberen und unteren Flügeln (6, 7) den mindestens einen oberen Flügel (6) und den mindestens einen unteren Flügel (7) umfasst.

4. Flugschrauber (1) nach Anspruch 1, bei dem sich die hintere horizontale Flächenstruktur (13) an einer Backbordseite (4e) und an einer Steuerbordseite (4f) des Flugschraubers (1) in der Querrichtung seitwärts von dem hinteren Rumpfabschnitt (4b) (23) erstreckt.

5. Flugschrauber (1) nach Anspruch 4, wobei die hintere horizontale Flächenstruktur (13), die sich an der Backbordseite (4e) des Flugschraubers (1) in der Querrichtung (23) seitwärts von dem hinteren Rumpfabschnitt (4b) erstreckt, mit der hinteren horizontalen Flächenstruktur (13) verbunden ist, die sich an der Steuerbordseite (4f) des Flugschraubers (1) von dem hinteren Rumpfabschnitt (4b) in der Querrichtung (23) seitwärts erstreckt.

6. Flugschrauber (1) nach Anspruch 4, bei dem die hintere horizontale Flächenstruktur (13) ferner mindestens ein Höhenruder (27) umfasst, das eingerichtet ist, um zumindest während eines Vorwärtsfluges oder während des Schwebefluges beweglich zu sein.

7. Flugschrauber (1) nach Anspruch 4, bei dem die Festflügelanordnung (5) ferner umfasst:
mindestens ein erstes Seitenleitwerk (17) des mindestens einen Seitenleitwerks (17), das unter dem vorgegebenen Winkel (17a) an der hinteren horizontalen Flächenstruktur (13) an der Backbordseite (4e) des Flugschraubers (1) angeordnet ist; und
mindestens ein zweites Seitenleitwerk (17) des mindestens einen Seitenleitwerks (17), das unter dem vorgegebenen Winkel (17a) an der hinteren horizontalen Flächenstruktur (13) an der Steuerbordseite (4f) des Flugschraubers (1) angeordnet ist.

8. Flugschrauber (1) nach Anspruch 7, bei dem die hintere horizontale Flächenstruktur (13) eine Hinterkante (14) am Heck des Rumpfes (4) umfasst, und bei dem die mindestens ersten und zweiten Seitenleitwerke (17) in Längsrichtung (22) über die Hinterkante (14) der hinteren horizontalen Flächenstruktur (13) hinausragen.

9. Flugschrauber (1) nach Anspruch 1, bei dem die hintere horizontale Flächenstruktur (13) ein am Rumpf (4) befestigtes erstes Ende (13a) und ein dem ersten Ende (13a) gegenüberliegendes zweites Ende (13b) aufweist, und wobei das mindestens eine Seitenleitwerk unter dem vorgegebenen Winkel (17a) an der hinteren horizontalen Flächenstruktur (13) am zweiten Ende (13b) angeordnet ist.

10. Flugschrauber (1) nach Anspruch 9, bei dem das zweite Ende (13b) in Längsrichtung (22) mit dem unteren Flügelverbindungsbereich (10) fluchtet.

11. Flugschrauber (1) nach Anspruch 1, bei dem der Rumpf (4) ferner eine stromlinienförmige Schnittkontur (18) an der Verbindung zwischen dem unteren Rumpfabschnitt (4c) und dem oberen Rumpfabschnitt (4d) umfasst, wobei die stromlinienförmige Schnittkontur (18) am hinteren Rumpfabschnitt (4b) eine spitze Form aufweist.

12. Flugschrauber (1) nach Anspruch 1, bei dem der Rumpf (4) ferner eine stromlinienförmige Schnittkontur (18) an der Verbindung zwischen dem unteren Rumpfabschnitt (4c) und dem oberen Rumpfabschnitt (4d) umfasst, wobei die stromlinienförmige Schnittkontur (18) am hinteren Rumpfabschnitt (4b) eine abgerundete Form aufweist.

13. Flugschrauber (1) nach Anspruch 1, bei dem der Rumpf ferner ein hinteres Rumpfende (15) umfasst, das eine spitze Querschnittsform parallel zu einer durch die Längsrichtung (22) und die Querrichtung (23) definierten Ebene aufweist.

14. Flugschrauber (1) nach Anspruch 1, bei dem der Rumpf (4) ferner eine Rückenflosse (21) umfasst, die sich vom Rumpf (4) in der Längsrichtung (22) und über die hintere horizontale Flächenstruktur (13) hinaus erstreckt.

15. Flugschrauber (1) nach Anspruch 14, bei dem die Rückenflosse (21) in vertikaler Richtung (38) oberhalb der hinteren horizontalen Flächenstruktur (13) angeordnet ist.

## Revendications

1. Hélicoptère hybride (1) s'étendant suivant une direction longitudinale (22), une direction transversale (23), et une direction verticale (38), et comprenant :
un fuselage (4) s'étendant suivant la direction longitudinale (22) depuis une section avant de fuselage (4a) jusqu'à une section arrière de fuselage (4b), et suivant la direction verticale (38) depuis une section inférieure de fuselage (4c) jusqu'à une section supérieure de fuselage (4d) ;
au moins un rotor principal (2) qui est agencé à l'emplacement de la section supérieure de fuselage (4d) et qui est au moins apte à générer de la portance en fonctionnement, ledit au moins un rotor principal (2) comprenant :
au moins deux pales de rotor (2a, 2b) qui forment un disque de rotor principal (3) lors de la rotation dudit au moins un rotor principal (2), dans lequel le disque de rotor principal (3) définit un périmètre d'hélicoptère hybride (3a) ; et
un agencement de voilure fixe (5) qui est entièrement agencé à l'intérieur du périmètre d'hélicoptère hybride (3a) et qui est agencé latéralement par rapport au fuselage (4), l'agencement de voilure fixe (5) comprenant :
une structure plane horizontale arrière (13) s'étendant latéralement depuis la section arrière de fuselage (4b) suivant la direction transversale (23),
au moins un stabilisateur vertical (17) qui est agencé avec un angle prédéterminé (17a) à l'emplacement de la structure plane horizontale arrière (13),
au moins une aile supérieure (6) qui est raccordée à la section supérieure de fuselage (4d),
au moins une aile inférieure (7) qui est raccordée à la section inférieure de fuselage (4c) et qui comprend une partie extérieure (26) et une partie intérieure (12), dans lequel la partie intérieure (12) est raccordée au fuselage (4) et forme une partie intégrale avec la structure plane horizontale arrière (13), et dans lequel la partie extérieure (26) est raccordée à la partie intérieure (12) à l'emplacement d'une zone de jonction de l'aile inférieure (10), et
une zone d'interconnexion (11), dans laquelle l'une parmi lesdites au moins une ailes supérieures (6) est raccordée à l'une parmi lesdites au moins une ailes inférieures (7) associée.

2. Hélicoptère hybride (1) selon la revendication 1, comprenant en outre :
au moins un propulseur (8) qui est au moins apte à générer une propulsion vers l'avant en fonctionnement, dans lequel un parmi lesdits au moins un propulseurs est monté sur la zone d'interconnexion (11).

3. Hélicoptère hybride (1) selon la revendication 1 ou 2, dans lequel l'agencement de voilure fixe (5) comprend en outre :
au moins une première paire d'ailes supérieure et inférieure (6, 7) agencée sur un côté bâbord (4e) de l'hélicoptère hybride (1) ; et
au moins une seconde paire d'ailes supérieure et inférieure (6, 7) agencée sur un côté tribord (4f) de l'hélicoptère hybride (1), dans lequel ladite au moins seconde paire d'ailes supérieure et inférieure (6, 7) comprend ladite au moins une aile supérieure (6) et ladite au moins une aile inférieure (7).

4. Hélicoptère hybride (1) selon la revendication 1 ou 2, dans lequel la structure plane horizontale arrière (13) s'étend latéralement depuis la section arrière de fuselage (4b) suivant la direction transversale (23) sur un côté bâbord (4e) et sur un côté tribord (4f) de l'hélicoptère hybride (1).

5. Hélicoptère hybride (1) selon la revendication 4, dans lequel la structure plane horizontale arrière (13) qui s'étend latéralement depuis la section arrière de fuselage (4b) suivant la direction transversale (23) sur le côté bâbord (4e) de l'hélicoptère hybride (1) est raccordée à la structure plane horizontale arrière (13) qui s'étend latéralement depuis la section arrière de fuselage (4b) suivant la direction transversale (23) sur le côté tribord (4f) de l'hélicoptère hybride (1).

6. Hélicoptère hybride (1) selon la revendication 4, dans lequel la structure plane horizontale arrière (13) comprend en outre :
au moins une gouverne de profondeur (27) qui est apte à être déplacée au moins lors d'un vol vers l'avant ou lors d'un vol stationnaire.

7. Hélicoptère hybride (1) selon la revendication 4, dans lequel l'agencement de voilure fixe (5) comprend en outre :
au moins un premier stabilisateur vertical (17) parmi lesdits au moins un stabilisateurs verticaux (17) qui est agencé avec l'angle prédéterminé (17a) à l'emplacement de la structure plane horizontale arrière (13) sur le côté bâbord (4e) de l'hélicoptère hybride (1) ; et
au moins un second stabilisateur vertical (17) parmi lesdits au moins un stabilisateurs verticaux (17) qui est agencé avec l'angle prédéterminé (17a) à l'emplacement de la structure plane horizontale arrière (13) sur le côté tribord (4f) de l'hélicoptère hybride (1).

8. Hélicoptère hybride (1) selon la revendication 7, dans lequel la structure plane horizontale arrière (13) comprend le bord de fuite (14) à l'arrière du fuselage (4), et dans lequel lesdits au moins premier et second stabilisateurs verticaux (17) s'étendent suivant la direction longitudinale (22) au-delà du bord de fuite (14) de la structure plane horizontale arrière (13).

9. Hélicoptère hybride (1) selon l'une quelconque des revendications précédentes, dans lequel la structure plane horizontale arrière (13) possède une première extrémité (13a) qui est fixée au fuselage (4) une seconde extrémité (13b) à l'opposé de la première extrémité (13a), et dans lequel ledit au moins un stabilisateur vertical (17) est agencé avec l'angle prédéterminé (17a) à l'emplacement de la structure plane horizontale arrière (13) sur la seconde extrémité (13b).

10. Hélicoptère hybride (1) selon la revendication 9, dans lequel la seconde extrémité (13b) est alignée suivant la direction longitudinale (22) avec la zone de jonction de l'aile inférieure (10).

11. Hélicoptère hybride (1) selon l'une quelconque des revendications précédentes, dans lequel le fuselage (4) comprend en outre :
un profil à section aérodynamique (18) à l'emplacement du raccordement entre la section inférieure de fuselage (4c) et la section supérieure de fuselage (4d), dans lequel le profil à section aérodynamique (18) présente une forme en pointe à l'emplacement de la section arrière de fuselage (4b).

12. Hélicoptère hybride (1) selon l'une quelconque des revendications 1 à 10, dans lequel le fuselage (4) comprend en outre :
un profil à section aérodynamique (18) à l'emplacement du raccordement entre la section inférieure de fuselage (4c) et la section supérieure de fuselage (4d), dans lequel le profil à section aérodynamique (18) présente une forme arrondie à l'emplacement de la section arrière de fuselage (4b).

13. Hélicoptère hybride (1) selon l'une quelconque des revendications précédentes, dans lequel le fuselage comprend en outre :
une extrémité de fuselage arrière (15) qui présente une forme de section transversale en pointe parallèle à un plan défini par la direction longitudinale (22) et la direction transversale (23).

14. Hélicoptère hybride (1) selon l'une quelconque des revendications précédentes, dans lequel le fuselage (4) comprend en outre :
un stabilisateur dorsal (21) qui s'étend depuis le fuselage (4) suivant la direction longitudinale (22) et au-delà de la structure plane horizontale arrière (13).

15. Hélicoptère hybride (1) selon la revendication 14, dans lequel le stabilisateur dorsal (21) est agencé suivant la direction verticale (38) au-dessus de la structure plane horizontale arrière (13).
